# EUROPEAN PATENT APPLICATION

(11) **EP 1 816 367 A1**
(43) Date of publication of application: **08.08.2007**
(21) Application number: 05806163.1
(22) Date of filing: 09.11.2005
(51) Int. Cl.: F16D 25/0638, F16D 25/12

(54) **CLUTCH PISTON**

(30) Priority: 12.11.2004 JP 2004328485
(71) Applicant: NOK Corporation, Minato-ku Tokyo 105-8585 (JP)
(72) Inventor: KIRIKI, Koichi, NOK CORPORATION 8, Fukushima-shi, Fukushima 960-1102 (JP); GOTO, Kiichiro, NOK CORPORATION 8, Fukushima-shi, Fukushima 960-1102 (JP)
(74) Representative: TBK-Patent
(86) International application number: PCT/JP2005/020506
(87) International publication number: WO 2006/051801

(57) **Abstract**

A low cost clutch piston (1), which is made capable of applying large operation force to a multiplate clutch (4) by making the outer diameter (D_{B}) of a pressure receiving surface of the clutch piston (1) larger than the diameter of a clutch pressing section (16), is provided. The clutch piston (1) is provided with a piston body (10) that is movably inserted in a cylinder (2) so as to be movable in the axial direction and with an inner peripheral seal lip (21) andanouterperipheral seal lip (22) that are integrally arranged on the inner periphery and the outer periphery of the piston body (10) and are made to be slidably in close contact with an inner tube section (2a) and an outer tube section (2b) of the cylinder (2). The piston body (10) has the clutch pressing section (16) for pressing the multiplate clutch (4). The clutchpressing section (16) is formed to bend to the inner periphery side through a tapered section (15) that extends with inclination from an outer periphery circular tube section (14) of the piston body (10) to the inner periphery side.

## Description

### BACKGROUND OF THE INVENTION

### Field of the Invention

The present invention relates to a clutch piston mounted on an automobile transmission for making shift operation of a clutch.

### Description of the Conventional Art

An automobile transmission includes a clutch piston which is displaced in a clutch cylinder in an axial direction by oil pressure so as to press a drive plate at the drive shaft side to a driven plate at the driven shaft side in a multiplate clutch. As for such clutch piston which has been used, there is a clutch piston, in which a seal lip is made to be slidably in close contact with the clutch cylinder, is integrated with an outer periphery section and inner periphery section of a piston body by vulcanization bonding (a bondet piston seal). As a typical conventional technique of this kind of the clutch piston, for example, a technique indicated in the following patent document 1 has been known.
Patent Document 1: Japanese Patent Application Laid Open No. 11-351273
Patent Document 2: Japanese Patent Application Laid Open No. 2000-46071

As for the conventional clutch pistons described in the above-described patent documents 1 and 2, large operation force to the multiplate clutch can be achieved by making the outer diameter of a pressure receiving surface of the clutch piston greater than the diameter of a clutch pressing section, which presses the multiplate clutch so as to make the drive plate to be in pressure contact with the driven plate.

However, the clutch piston described in the patent document 1 has the clutch pressing section which is made by largely bending a disc-shaped section of the piston clutch formed from a metal plate in the axial direction so as to have a U-shaped cross section. So, the volume of an oil pressure chamber is increased so as to deteriorate operation response. Therefore, in order to prevent this problem, the clutch piston has a structure in which a rubber layer with an integrally formed seal lip is filled in the bending section having a U-shaped cross section. However, there are problems in the bending section that a rubber material is insufficiently filled at the time of molding and inferior molding is easily caused by remained oil and fat content.

Further, the clutch piston described in the patent document 2 includes a clutch pressing section formed by folding and bending an outer periphery portion of the clutch piston in the radial direction so as to have a U-shaped cross section, and many bending processes are required. Therefore, it takes long time to form the clutch piston. In addition, the production cost is increased.

### SUMMARY OF INVENTION

### Problems to be Solved by the Invention

The present invention is to solve the above-described problem, and an objective of the present invention is to provide a low cost clutch piston which is made capable of applying large operation force to a multiplate clutch, by making the outer diameter of a pressure receiving surface of the clutch piston larger than the diameter of a clutch pressing section.

### Means for Solving the Problems

As for a means for effectively solving the above-described technical problems, a clutch piston according to an aspect of the present invention is provided with a piston body that is inserted in a cylinder so as to be movable in an axial direction; and an inner periphery seal lip and an outer periphery seal lip that are integrally arranged on the inner periphery and the outer periphery of the piston body and are made to be slidably in close contact with an inner tube section and an outer tube section of the cylinder. The piston body has a clutch pressing section for pressing a multiplate clutch. The clutch pressing section is formedto bend to the inner periphery side through a tapered section that extends with inclination from an outer periphery section of the piston body to the inner periphery side.

In the above-described constitution, the clutch pressing section can be easily formed at a position at the inner periphery side than an inner peripheral diameter (an outer diameter-a plate thickness x 2) of the piston body by forming the tapered section. Further, as for the clutch pressing section, an outer diameter of the pressure receiving surface of the clutch piston with respect to pressure supplied into the cylinder is larger than a diameter of the clutch pressing section. Thus, large operation force to the multiplate clutch can be achieved.

### Effectiveness of the Invention

In the clutch piston according to the above aspect of the present invention, large operation force can be achieved, and a narrow space, which is conventionally formed by a section folded in the axial direction, is not formed. So, when the clutch piston is produced, inferior molding is not caused at the time of integrating the clutch piston with the seal lip. Therefore, the clutch piston can be produced at a low cost.

### BRIEF EXPLANATION OF DRAWINGS

Fig. 1 is a cross sectional view of an embodiment of a clutch piston according to the present invention, which is shown in a state of being cut by a plane passing a shaft axis O.
Fig. 2 is a view for showing a drawing process in the production of a piston body 10 of a clutch piston 1 in the embodiment of Fig. 1.
Fig. 3 is a view for showing a first caulking process in the production of a piston body 10 of a clutch piston 1 in the embodiment of Fig. 1.
Fig. 4 is a view for showing a second caulking process in the production of a piston body 10 of a clutch piston 1 in the embodiment of Fig. 1.

### Description of Reference Numerals

1: Clutch piston
10: Piston body
10': Metal plate
11: Inner periphery seal lip holding section
12: End plate section
13: Outer periphery seal lip holding section
14, 14': Outer periphery tubular section
15: Tapered section
16: Clutch pressing section
16': Caulking section
20: Bondet piston seal
21: Inner periphery seal lip
22: Outer periphery seal lip
23: Buffer body
2: Clutch cylinder (Cylinder)
2a: Inner tube section
2b: Outer tube section
2c: End plate section
3: Clutch hub
4: Multiplate clutch
41: Drive plate
42: Driven plate
43: Retainer
5: Return spring
100: Drawing die
200: Caulking die

### DETAILED DESCRIPTION OF PREFERRED EMBODIMENT

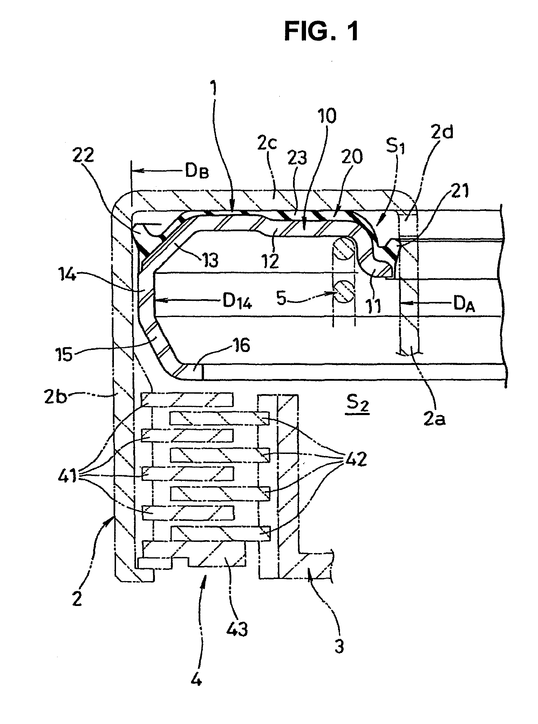

Hereinafter, the preferred embodiment of a clutch piston according to the present invention will be described with drawings. Fig. 1 is a cross sectional view of an embodiment of a clutch piston according to the present invention, which is shown in a state of being cut by a plane passing a shaft axis O.

A clutch piston 1 illustrated in Fig. 1 includes a piston body 10 formed by pressing a metal plate such as a steel plate or the like; and a bonded piston seal 20 which is integrally vulcanization-molded (vulcanization-bondet) with the piston body 10 by a rubber-like elastic material.

Further, in a portion illustrated with a double dotted chain line, the reference numeral 2 is a clutch cylinder provided at the drive shaft side which is not illustrated. The clutch cylinder has an annular shape and its cross sectional shape (the cross sectional shape illustrated in the drawings) obtained by being cut by a plane passing a center axis O is an approximately U-shape. In particular, the clutch cylinder 2 has an inner tube section 2a, an outer tube section 2b and an end plate section 2c. Further, the clutch piston 1 is housed in a space surrounded by the inner tube section 2a, the outer tube section 2b and the end plate section 2c of the clutch cylinder 2 so as to be movable in the axial direction. In addition, the clutch cylinder 2 is also referred to as a cylinder in the present application.

The reference numeral 3 in Fig. 1 is a clutch hub provided at the driven shaft side which is not illustrated. The reference numeral 4 is a multiplate clutch, in which a plurality of drive plates 41, which is locked at the inner periphery of the outer tube section 2b of the clutch cylinder 2 so as to be movable in the axial direction in a rotation stopped state, and a plurality of driven plates 42, which is locked at the clutch hub 3 side so as to be movable in the axial direction in a rotation stopped state, are alternately arranged in the axial direction and prevented to be slipped off by a retainer 43 at the clutch cylinder 2 side. The reference numeral 5 is a spring for energizing the clutch piston 1 in the direction to separate from the multiplate clutch 4.

The piston body 10 in the clutch piston 1 includes an inner periphery seal lip holding section 11, an end plate section 12 outwardly extending in a disc-like shape from the inner periphery seal lip holding section 11, a tapered outer periphery seal lip holding section 13 along the outer periphery of the end plate section 12, an outer periphery tubular section 14 extending in a tubular shape from the outer periphery of the outer periphery seal lip holding section 13, a tapered section 15 extending with inclination from the end part of the outer periphery tubular section 14 to the inner periphery side, and a clutch pressing section 16 formed to bend to the inner periphery side from a small diameter end part of the tapered section 15.

The clutch piston pressing section 16 is positioned at the inner periphery side than an inner periphery diameter D₁₄ (the outer diameter - the plate thickness x 2) of an outer periphery tubular section 14 of the piston body 10. Further, the clutch piston pressing section 16 extends from a round bending section between the clutch piston pressing section 16 and the tapered section 15 so as to have an plane which is approximately orthogonal to the shaft axis O, and adjacently faces the drive plate 41 in the multiplate clutch 4 in the axial direction.

The bondet piston seal 20 in the clutch piston 1 has an inner periphery seal lip 21 integrally provided on the outer surface of the inner periphery seal lip holding section 11 of the piston body 10, and an inner periphery seal lip 22 integrally provided on the outer surface of the outer periphery seal lip holding section 13 of the piston body 10. The inner periphery seal lip 21 and the outer periphery seal lip 22 are formed with mutually continued rubber elastic materials through a film-like shock absorber 23 adhered so as to cover the outer surface of the end plate section 12 of the piston body 10.

The inner periphery seal lip 21 has an approximately tapered surface shape with the top end side projecting toward the inner periphery, and the inner periphery end part of the inner periphery seal lip 21 is made to be slidably in close contact with the outer periphery surface of an inner tube section 2a in the clutch cylinder 2. On the other hand, the outer periphery seal lip 22 has an approximately tapered surface shape with the top end side projecting toward the outer periphery, and the outer periphery end part of the outer periphery seal lip 22 is made to be slidably in close contact with the inner periphery surface of an outer tube section 2b in the clutch cylinder 2.

The space surrounded by the inner tube section 2a, the outer tube section 2b and the end plate section 2c of the clutch cylinder 2 is separated to an oil pressure chamber S₁ at the end plate section 2c side and an operation chamber S₂ at the multiplate clutch 4 and return spring 5 side by the clutch piston 1 housed in the space. Further, oil pressure chamber S₁ communicates to an oil supply passage provided at the not-illustrated drive shaft side through a pressure introducing hole 2d opening in the clutch cylinder 2.

In the above-described constitution, when operation oil is supplied to the oil pressure chamber S₁ through the pressure introducing hole 2d, the clutch piston 1 moves in the axial direction so as to separate from the end plate section 2c in the clutch cylinder 2 against energizing force of the return spring 5 by the increased oil pressure of the oil pressure chamber S₁, and presses the drive plate 41 to the driven plate 42 in the multiplate clutch 4. Thus, the drive plate 41 and the driven plate 42 become in the connected state so as to transmit power from the drive shaft to the driven shaft.

In this case, the inner diameter D_{A} of the pressure receiving surface of the clutch piston 1, which receives the oil pressure of the oil pressure chamber S₁ in the axial direction, corresponds to the outer diameter of the inner tube section 2a of the clutch cylinder 2 made to be in close contact with the inner periphery seal lip 21. The outer diameter D_{B} of the pressure receiving surface corresponds to the inner diameter of the outer tube section 2b of the clutch cylinder 2 made to be in close contact with the outer periphery seal lip 22. Further, in this embodiment, by making the outer diameter D_{B} of the pressure receiving surface larger than the diameter of the clutch pressing section 16, the pressure receiving surface area of the clutch piston 1 can be increased. Thus, when the operation oil is supplied to the oil pressure chamber S₁ through the pressure introducing hole 2d, large pressing force to the multiplate clutch 4 can be obtained.

Further, the clutch pressing section 16 is formed to bend to the inner periphery side from a small diameter end part of the tapered section 15 of the piston body 10. Thus, when the drive plate 41 is pressed to the driven plate 42 in the multiplate clutch 4 by the oil pressure in the oil pressure chamber S₁, the tapered section 15 is deformed so as to slightly incline to the inner periphery side. As a result of this, since the top end of the clutch pressing section 16 is deformed so as to slightly warp back, the drive plate 41 is hardly damaged.

Then, when the oil pressure in the oil pressure chamber S₁ is released, the clutch piston 1 moves to the end plate section 2c side by energizing force of the return spring 5, so as to release the press contact of the drive plate 41 to the driven plate 42 in the multiplate clutch 4, so that the power transmission from the drive shaft to the driven shaft is intercepted. At this time, the clutch piston 1 shock-absorbedly contacts to the end plate section 2c of the clutch cylinder 2 by the shock absorber 23 of the bondet piston seal 20 made of a rubber elastic material.

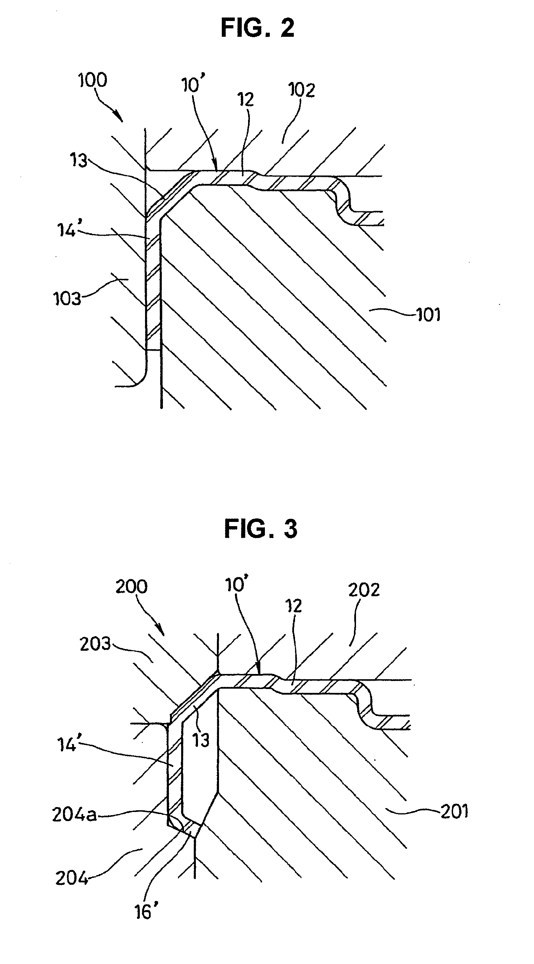

Figs. 2, 3 and 4 are views for showing the production process of the piston body 10 in the clutch piston 1.

In the drawing process shown in Fig. 2, a metal plate 10' is drawn to be in a dish shape (a cup shape) by a drawing mold 100 including divided molds 101 to 103. In particular, the end plate section 12 is formed between the divided molds 101 and 102, and the outer periphery side of end plate section 12 is drawn by the inner periphery of the divided mold 103, so that the outer periphery seal lip holding section 13 and an outer periphery tubular section 14' are formed.

Then, in the first caulking process shown in Fig. 3, a caulking section 16' is formed at an top end of the outer periphery tubular section 14' of the metal plate 10' by a caulking mold 200 including divided molds 201 to 204. More particularly, the end plate 12 is held between the divided molds 201 and 202, and the outer periphery seal lip holding section 13 is supported by the divided mold 203. While keeping this state, the caulking section 16' is caulked to the inner periphery side by an external caulking mold 204 having a tapered forming surface 204a on the inner periphery thereof. Thus formed caulking section 16' is a part which becomes the clutch pressing section 16 in the clutch piston 1 in Fig. 1, and has a tapered shape inclined at a proper inclination angle, whereby the inner periphery (the top end) thereof is outwardly projected in this process.

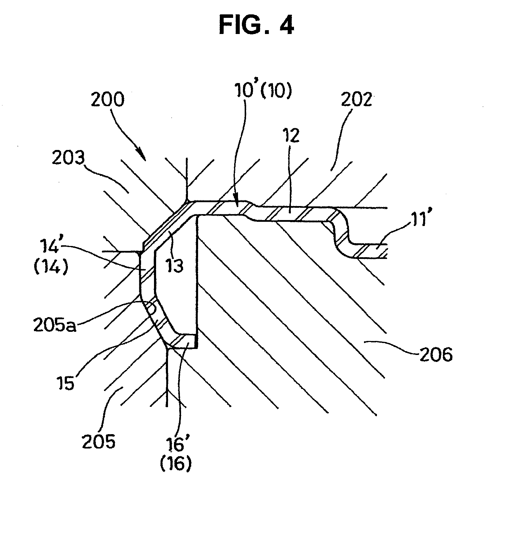

Then, in the second caulking process shown in Fig. 4, a tapered section 15 is formed at a part at the caulking section 16' side in the outer periphery tubular section 14' of the metal plate 10' by another external caulking mold 205 in the caulking mold 200. More particularly, following to the above-described state in Fig. 3, the end plate section 12 is held between the divided mold 201 and 206, and the outer periphery seal lip holding section 13 is supported by the divided mold 203. While keeping this state, the part at the caulking section 16' side in the outer periphery tubular section 14' is bent to the inner periphery side so as to have a tapered shape by the second external caulking mold 205 having a tapered-formed surface 205a on the inner periphery thereof.

Further, in the second caulking process in Fig. 4, the tapered caulking section 16', which is inclined at the proper inclination angle whereby the inner periphery (the top end) thereof is outwardly projected, is drawn to the inner periphery side in the forming process of the tapered section 15, and is deformed so as to have a plane approximately orthogonal to the shaft axis O. Thus, the clutch pressing section 16, which is positioned at the inner periphery side than the inner periphery diameter D₁₄ of the outer periphery tubular section 14 of the piston body 10 illustrated in Fig. 1, and inwardly extends so as to have a plane approximately orthogonal to the shaft axis O, can be easily formed.

After finishing the second caulking process in Fig. 4, the inner periphery side 11' of the end plate section 12 is punched by a not-illustrated punching die and worked into a radius shape, whereby the inner periphery seal lip holding section 11 illustrated in Fig. 1 is formed.

Further, after a vulcanization bonding agent is applied onto the outer surfaces of the inner periphery seal lip holding section 11, the end plate section 12 and the outer periphery seal lip holding section 13, the piston body 10 produced by the above-described process is set in a not-illustrated mold for vulcanization molding. Then, an annular cavity is formed between the surfaces, on which the vulcanization bonding agent is applied, of the inner periphery seal lip holding section 11, the end plate section 12 and the outer periphery seal lip holding section 13, and the inner surface of the mold. By filling a un-vulcanized rubber material in the cavity and heating and pressurizing it, the bondet piston seal 20 including the inner periphery seal lip 21, the outer periphery seal lip 22 and the shock absorber 23 is vulcanization-adhered (integrally molded) to the piston body 10 simultaneously with being vulcanization-molded.

At this time, since the piston body 10 does not have a narrow deep space which is conventionally formed by the section folded in the axial direction, the insufficient molding due to the insufficient filling of the un-vulcanized rubber material is hardly generated in the integral molding process of the above-described bondet piston seal 20. Thus, the clutch pressing section 16 can be formed at the piston body 10 by only the caulking process, so that the clutch piston 1 illustrated in Fig. 1 can be produced with a low cost.

### INDUSTRIAL APPLICABILITY

As described above, the present invention can be preferably applied to a clutch piston mounted on an automobile transmission for making shift operation of a clutch. Further, by making the outer diameter of the pressure receiving surface of the piston larger than the diameter of a clutch pressing section, large operation force to a multiplate clutch can be obtained.

## Claims

1. A clutch piston provided with:
a piston body (10) that is inserted in a cylinder (2) so as to be movable in the axial direction; and
an inner periphery seal lip (21) and an outer periphery seal lip (22) that are integrally arranged on the inner periphery and the outer periphery of the piston body (10) and are made to be slidably in close contact with an inner tube section (2a) and an outer tube section (2b) of the cylinder (2),
wherein the piston body (10) has a clutch pressing section (16) for pressing a multiplate clutch (4), and
wherein the clutch pressing section (16) is formed to bend to the inner periphery side through a tapered section (15) that extends with inclination from an outer periphery section of the piston body (10) to the inner periphery side.
